# EUROPEAN PATENT SPECIFICATION

(11) **EP 0 667 717 B1**
(45) Date of publication and mention of the grant of the patent: **10.05.2000**
(21) Application number: 95300909.9
(22) Date of filing: 14.02.1995
(51) Int. Cl.: H04N 7/26, H04N 5/937

(54) **Method and apparatus for reproducing picture data**
Verfahren und Vorrichtung zur Bilddatenwiedergabe
Méthode et appareil pour reproduire des données d'image

(30) Priority: 14.02.1994 JP 1727694
(43) Date of publication of application: 16.08.1995
(73) Proprietor: KABUSHIKI KAISHA TOSHIBA, Kawasaki-shi, Kanagawa-ken 210-8572 (JP)
(72) Inventor: Miyano, Yuichi, c/o Intellectual Property Div., Tokyo (JP)
(74) Representative: O'Connell, David Christopher

(56) References cited:
- EP-A- 0 510 640
- EP-A- 0 545 323
- EP-A- 0 629 085
- PATENT ABSTRACTS OF JAPAN vol. 16 no. 143 (P-1335) ,9 April 1992 & JP-A-04 000574 (CANON INC.) 6 January 1992,
- PATENT ABSTRACTS OF JAPAN vol. 16 no. 580 (P-1461) ,18 December 1992 & JP-A-04 229382 (RICOH CO LTD) 18 August 1992,
- SIGNAL PROCESSING IMAGE COMMUNICATION., vol. 2, no. 2, August 1990 AMSTERDAM NL, pages 155-169, XP 000243475 PEREIRA ET AL. 'A CCITT Compatible Coding Algorithm for Digital Recording of Moving Images'

## Description

The present invention relates to a method of, and apparatus for, reproducing picture data.

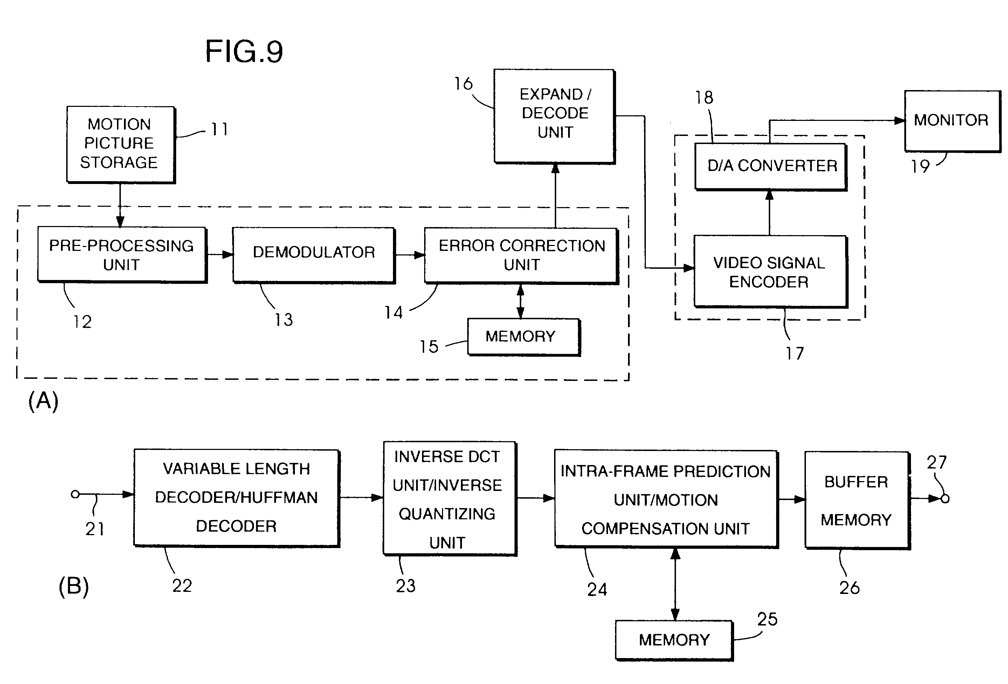

Figure 9(A) shows a known apparatus for reproducing picture data from a storage medium for displaying on a monitor. Figure 9(B) shows in more detail the decoder that expands and decodes compressed picture data, shown in Figure 9(A). As shown in Figures 9(A) and 9(B), a motion picture storage unit 11 includes a storage medium and a reproducing unit. A signal from motion picture storage unit 11 is input to a pre-processing unit 12. Pre-processing unit 12 amplifies and equalizes the signal from unit 11. The signal from pre-processing unit 12 is provided to a demodulator 13. Demodulator 13 demodulates the signal from unit 12. The signal from demodulator 13 is provided to an error correction unit 14. The signal from demodulator 13 is error corrected by error correction unit 14 in conjunction with a memory 15. The signal from error correction unit 14 is expanded and decoded by an expand/decode unit 16 to picture data in R, G, B format, or picture data in Y/Cb/Cr format, or picture data in CMYK format. The picture data is provided to a video signal encoder 17. The picture data from the expand/decode unit 16 is changed to a video signal (PAL or NTSC etc) in a video signal encoder 17. The video signal is then provided to a D/A converter 18, where it is converted to an analog video signal. The analog video signal from D/A converter 18 is provided to a display monitor 19. Display monitor 19 displays the video signal.

Figure 9(B) shows in more detail the expand/decode unit 16 in Figure 9(A). The compressed picture data received on input terminal 21 is provided to a variable length decoder and Huffman decoder 22. The compressed picture data is decoded in the variable length decoder and Huffman decoder 22. The picture data from the variable length decoder and Huffman decoder 22 is applied to an inverse discrete cosine transforming unit and inverse quantizing unit 23. The picture data is inverse discrete cosine transformed and inverse quantized in the inverse discrete cosine transforming unit and inverse quantizing unit 23. The picture data from the inverse discrete cosine transforming unit and inverse quantizing unit 23 is provided to an intra frame prediction unit and motion compensation unit 24. The picture data is predicted and compensated in conjunction with a memory 25 for intra frame prediction in the intra frame prediction unit and motion compensation unit 24. The picture data from the intra frame prediction unit and motion compensation unit 24 is output on an output terminal 27 through a buffer memory 26 for picture displaying.

Variable length decoding and Huffman decoding restores compressed picture data by entropy coding. Inverse discrete cosine transforming restores compressed data by direct-alternating interchange. Inverse quantizing restores quantized compressed data. Intra-frame coding is a method of forming an estimated picture by making use of the relationship between a picture and an adjoining block of the same frame. This coding is effective for compressing when a picture is simple. Inter-frame prediction coding is a method of forming an estimated picture by making use of a picture of an adjoining frame. This coding is effective for high compression when a moving picture experiences only a small amount of movement. A method known as "H.261" of ITU (International Telecommunication Union) can be employed to make use of estimated frames. A method of MPEG1 and 2 (Moving Picture Experts Group Phasel and Phase2) allows use of bidirectionally predicted frames.

As stated above, reproducing and inverse reproducing are often required. Conventially, a simple method of inverse reproducing can be practiced by providing memory between the expand/decode unit 16 and the video signal encoder 17. Some frames of picture data are stored in the memory, and the frames are reproduced in inverse frame order. In the case of the H.261 method, it is necessary to maintain picture data for at least a part of the refresh cycle. In the case of the MPEG methods, it is necessary to maintain picture data of one unit of a prescribed GOP (Group of Pictures). This is because it is not possible to reproduce picture data without using comparative picture data. Also it is necessary to change the order in which the picture data were stored.

The MPEG techniques discussed above are disclosed in EP-A-0545323.

EP-0629085 (published after the priority date of this invention) discloses a TV receiver, with means for decoding data, means for changing a resolution of the decoded data, and an output for supplying the changed resolution data, for example to a VCR.

Accordingly, the invention is directed to a method of reproducing a picture and apparatus for reproducing picture data that substantially obviates one or more problems due to limitations and disadvantages of the related art.

According to a first aspect of the present invention, there is provided an apparatus for reproducing picture data, comprising:
means (21) for receiving compressed picture data compressed by inter-frame/intra-frame prediction coding;
means (22) for decoding said compressed picture data; characterised by:
means (41) for decreasing a size of said picture data, thereby decreasing a resolution of said picture data;
a memory (44, 51) for storing said picture data with changed resolution;
means for reproducing said picture data from said memory;
means (42) for omitting and inserting frames of said picture data from said changed resolution picture data;
means (43) for changing an order of said picture data; and
means for selecting for reproduction said picture data from one of said means for changing an order and said means for decoding.

According to a second aspect of the present invention, there is provided a method for reproducing picture data, comprising the steps of:
receiving compressed picture data compressed by inter-frame prediction coding;
decoding said compressed picture data;
decreasing a size of said picture data thereby decreasing the resolution of said picture data;
storing in a memory the picture data with changed resolution;
reproducing said picture data from said memory; and
omitting and/or inserting frames from said picture data from said resolution decreasing step;
changing an order of said picture data; and
selecting from one of said picture data of changed order and said decoded picture data, to reproduce said picture data.

For a better understanding of the present invention, reference will now be made, by way of example, to the accompanying drawings, in which:

Fig. 1 is a diagrammatic illustration of apparatus for performing picture data reproduction in accordance with an embodiment of the invention.

Fig. 2 is a diagrammatic illustration of apparatus for performing picture data reproduction in accordance with another embodiment of the invention.

Fig. 3 is a diagrammatic illustration of apparatus for picture data reproduction in accordance with a further embodiment of the invention.

Fig. 4 is a diagrammatic illustration of apparatus for performing picture data reproduction in accordance with an additional embodiment of the invention.

Fig. 5 is a diagrammatic illustration showing processing of compressed coded picture data according to an MPEG standard.

Fig. 6(A) diagrammatically illustrates a memory map of memories shown in Fig. 1, and Fig. 6(B) diagrammatically illustrates a memory access map.

Fig. 7(a) illustrates a memory map of a memory illustrated in Fig. 2, and Fig. 7(B) shows a memory access map of the memory in Fig. 2.

Fig. 8(A) shows a memory map of a memory illustrated in Figs. 3 and 4, and Fig. 8(B) shows a memory access map for the memory shown in Figs. 3 and 4.

Fig. 9(A) shows apparatus for reproducing picture data from a storage medium for display, and Fig. 9(B) is a diagrammatic illustration of a decoder included in apparatus shown in Fig. 9(A).

Preferred embodiments of the invention will be described with reference to the drawings.

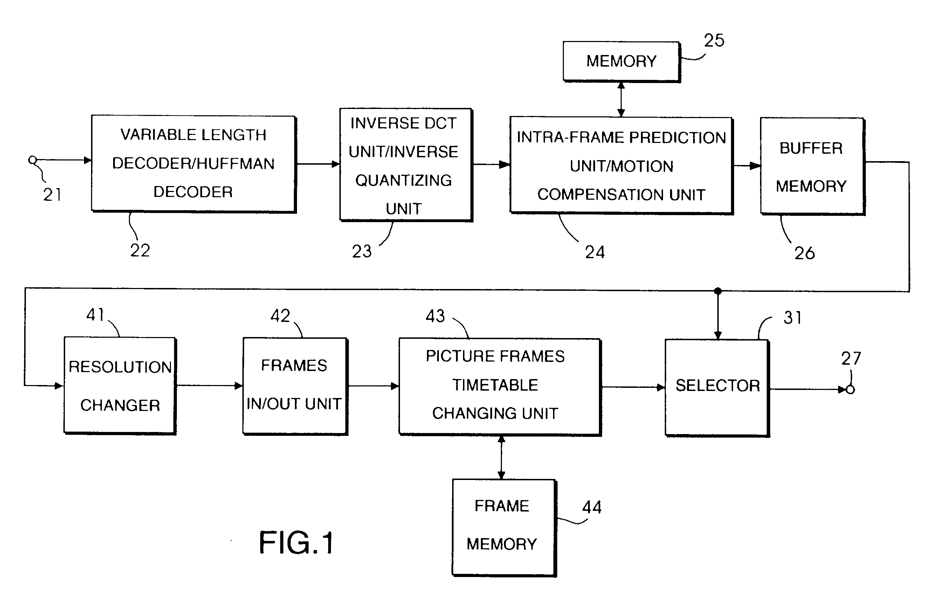

Figure 1 shows an apparatus constructed in accordance with the invention and for carrying out a method of the invention. Compressed data in MPEG format are inputted to input terminal 21. The compressed data is provided to a variable length decoder and Huffman decoder 22. The compressed data is decoded by the variable length decoder and Huffman decoder 22, and is provided to an inverse discrete cosine transforming unit and inverse quantizing unit 23. Data from the variable length decoder and Huffman decoder 22 is inverse discrete cosine transformed and inverse quantized in the inverse discrete cosine transforming unit and inverse quantizing unit 23. Data from the inverse discrete cosine transforming unit and inverse quantizing unit 23 is provided to an intra frame prediction unit and motion compensation unit 24. The data is predicted and compensated by use of intra frame prediction in the intra frame prediction unit and motion compensation unit 24 in conjunction with a memory 25. The motion compensated data is supplied to a buffer memory 26.

Data from the buffer memory 26 is provided to a resolution changer 41. Resolution changer 41 changes the resolution of the picture data, and hence decreases the size of the picture data.

The picture data from the intra frame prediction unit and motion compensation unit 24, after resolution change in the resolution changer 41, is provided to a frames in/out unit 42. In the frames in/out unit 42, frames of the picture data are omitted from and inserted in to the small sized picture data from the resolution changer 41 to increase and decrease the number of frames to control the speed of reverse reproducing.

The order of the frames is decided by a picture frames timetable changing unit 43 and the frame memory 44. The frames from the picture frames timetable changing unit 43 are output on the output terminal 27 through a selector 31.

According to the present invention, since the resolution changer 41 changes the resolution of picture data, the amount of picture data to be stored in memory 44 is reduced in quantity during reproduction of pictures including changes in frame order and control of speed of reproduction.

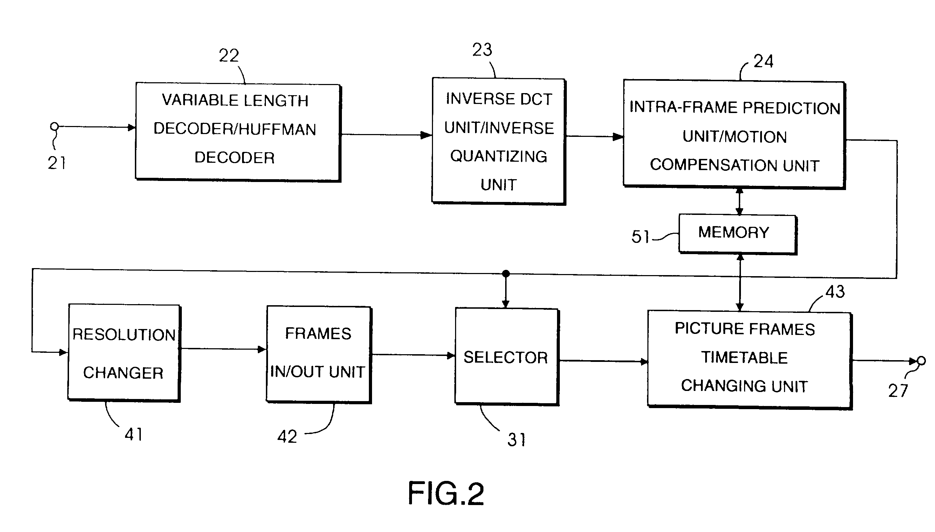

Figure 2 shows another apparatus constructed in accordance with the invention and for carrying out the method of the invention. In Figure 2 elements which are the same as those in Figure 1 are identified by the same reference numerals.

The apparatus in Figure 2 includes a single memory 51 which is used in place of the memory 25 and frame memory 44 of Figure 1.

In reproduction of a picture, picture data processed by intra frame prediction unit and motion compensation unit 24, by use of memory 51, is outputted on output terminal 27 through selector 31 and the picture frames timetable changing unit 43.

At this time, the unit of changing of timetable of picture frames 43 does not change the order of frames.

In reverse reproducing, picture data processed by the intra frame prediction unit and motion compensation unit 24, by use of memory 51, is provided to the resolution changer 41. A picture size of the picture data is changed by the resolution changer 41. The picture data from the resolution changer 41 is provided to the frames in/out unit 42. In the frames in/out unit 42, frames of picture data are removed from or inserted into the small sized picture data from the resolution changer 41 to increase or decrease the number of frames to control the speed of reverse reproducing.

The picture data from the frames in/out unit 42 supplies an input to the picture frames timetable changing unit 43 through selector 31. The order of the picture data is changed in the picture frames timetable changing unit 43 and the memory 51. The picture data from the picture frames timetable changing unit 43 is outputted from output terminal 27.

According to the second embodiment of the present invention, the apparatus for reproducing picture data can be connected with only the single memory 51. As compared with the prior art, the memory 51 needs a lower capacity when the frame order is changed during reproduction and the speed of reproduction is controlled.

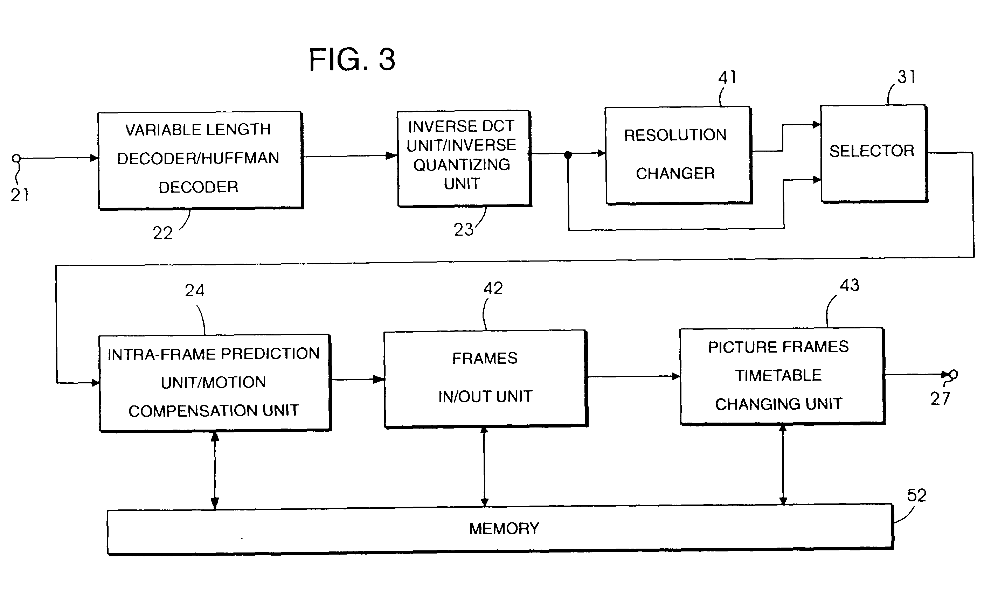

Figure 3 shows another apparatus constructed in accordance with the invention and for carrying out a method of the invention. In Figure 3 elements which are the same as those shown in Figure 1 and Figure 2 are identified by the same numerals. In this case, data from the inverse discrete cosine transforming unit and the inverse quantizing unit 23 is provided to one of the selector 31 and the resolution changer 41. Data from the resolution changer 41 is provided to another input of the selector 31. Data from the selector 31 is provided to the intra frame prediction unit and motion compensation unit 24.

The picture data is decoded by the intra frame prediction unit and motion compensation unit 24 by a process in which memory 52 is used. The picture data from the intra frame prediction unit and motion compensation unit 24 is provided to the frames in/out unit 42.

In the frames in/out unit 42, frames of the picture data are omitted or picture data is inserted. The processing by the frames in/out unit 42 utilizes capacity of the memory 52. The picture data from the frames in/out unit 42 is provided to the picture frames timetable changing unit 43. In the picture frames timetable changing unit 43, the order of frames of the picture data is changed, a process in which memory 52 is used, in order to reverse reproduce. The picture data from the picture frames timetable changing unit 43 is output to output terminal 27.

During normal picture reproduction, the picture data from the inverse discrete cosine transforming unit and inverse quantizing unit 23 is output to output terminal 27 through selector 31 without omitting of frames from the picture data or changing the order of the picture data.

In the resolution changer 41 in Figure 3, the picture data is changed in each picture block of one frame. For example, in a frame subdivided into an 8 X 8 grid of 64 picture blocks, resolution changer 41 can reduce the amount of pixel data by deleting a part of the pixel data in each picture block.

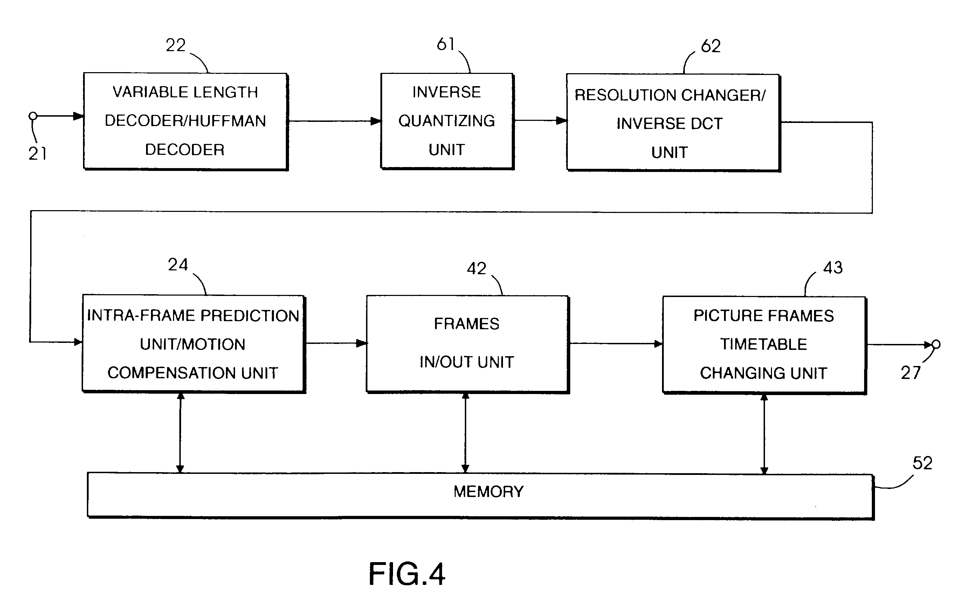

Figure 4 shows another apparatus constructed in accordance with the invention and for carrying out a method of the invention. In Figure 4 elements which are the same as those shown in Figure 1, Figure 2 and Figure 3 are identified by the same reference numerals. In this case, the picture data decoded by the variable length decoder and Huffman decoder 22 is supplied to an inverse quantizing unit 61. The picture data which is inverse quantized is provided to a resolution changer and an inverse discrete cosine transforming unit 62. The picture data is changed in resolution and inverse quantized in the resolution changer and inverse discrete cosine transforming unit 62. During normal picture reproduction, the picture data is only inverse discrete cosine transformed in the unit 62 without changing a resolution of the picture.

The picture data from the resolution changer and inverse discrete cosine transforming unit 62 is provided to the intra frame prediction unit and motion compensation unit 24. The picture data is decoded by the intra frame prediction unit and motion compensation unit 24, a process in which the memory 52 is used. The picture data from the intra frame prediction unit and motion compensation unit 24 is provided to the frames in/out unit 42.

In the frames in/out unit 42, frames of picture data are removed from and inserted into the small sized picture data to increase and decrease the number of frames to control the speed of reverse reproducing. The picture data from the frames in/out unit 42 is provided to the picture frames timetable changing unit 43. In the picture frames timetable changing unit 43, the order of frames of the picture data is changed, by use of memory 52, in order to inverse reproduce. The picture data from the picture frames timetable changing unit 43 is outputted to the output terminal 27.

According to the present invention, the picture data is changed in resolution and is also inverse quantized. Changing of picture size in the inverse discrete cosine transforming step is equivalent to a filtering process, and thus it is not necessary to process by digital filtering after changing picture size. It is not necessary to have exclusive hardware for changing of picture size, and so it is effective to reduce the size of the circuit. For example, the picture data that a low level of a coefficient of DCT (4 by 4 picture elements) selected from the picture data that inverse quantized as 1 block composed of 8 by 8 picture elements. The 4 by 4 picture elements are inverse discrete cosine transformed. It is possible to change picture size on account of preparing of brightness according to a rate of reduction. This art of changing of picture size is described in "INTERFACE Jan 1993" in Japan incorporated herein by reference. The art of MPEG1 and 2 (Moving Pictures Experts Group Phase1 and Phase2) is described in "INTERFACE Aug 1992" in Japan.

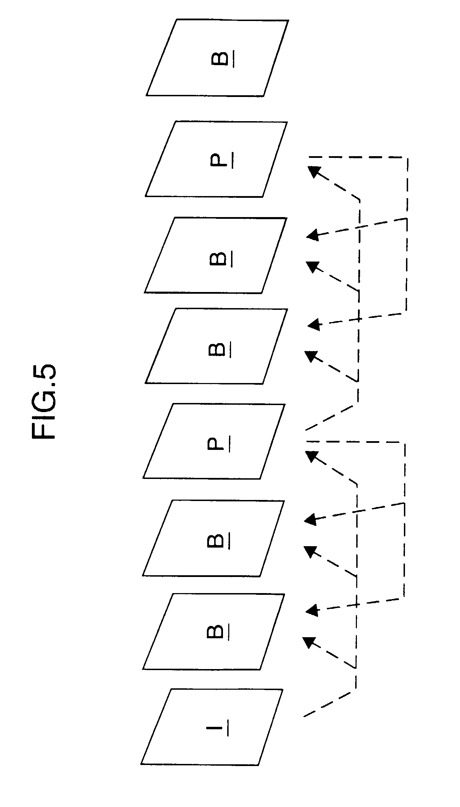

A further explanation regarding the capacity of memory and a form of using memory in Figures 1-4 is described next. Referring to Figure 5, there is shown how to decompress coding of each frame when reproducing compressed coding picture data according to an MPEG standard, wherein the I frame is an intra-frame coded picture, the P frame is predictive-picture, and the B frame is a bidirectionally predictive-picture.

In reproduction, no reference picture is required to reproduce the I frame. A P frame is reproduced from an I frame and P frame that precede it as reference picture. A B frame is reproduced from two I frames, I and P frames, or two P frames that precede and follow the B frame as two reference pictures. Figure 5 shows in dashed lines the frames which are used to derive other frames.

Accordingly, it is necessary to provide sufficient memory capacity for at least two frames of picture data to store reference picture data for decoding all frames. It is also necessary to have a buffer memory of about one frame for storing the balance of output picture data and controlling decoding times.

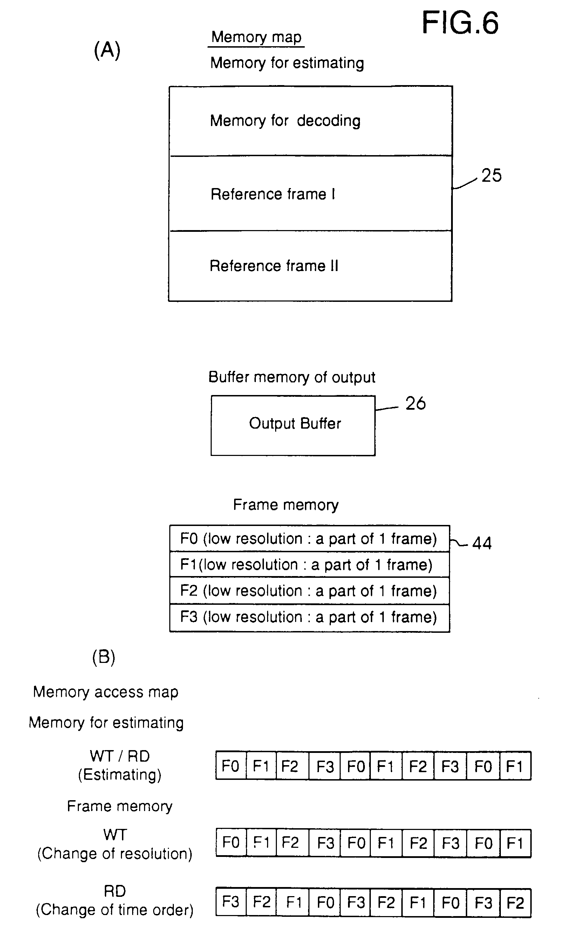

In view of the above, a memory capacity and a form of using memory is determined. Figure 6(A) shows a memory map of memory 25, frame memory 44 and buffer memory 26 in Figure 1. Figure 6(B) shows a memory access map. This is an example in which only 1/4 of the normal memory capacity is required for each frame, on account of the change of resolution. The memory capacity required to reproduce a frame is reduced to 1/4 the capacity that would be required if the resolution were not changed.

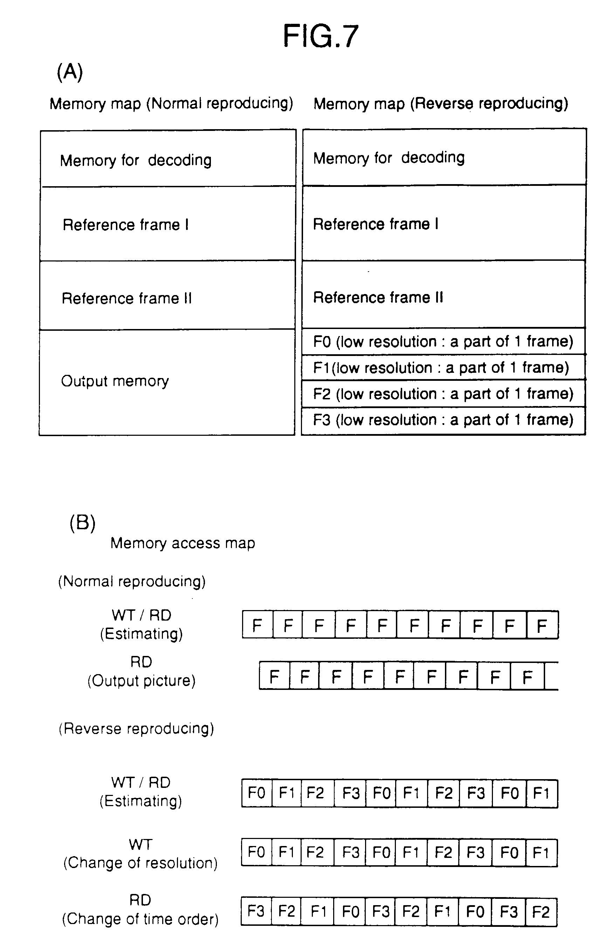

Figure 7(A) shows a map of memory 51 when reproducing and special reproducing in Figure 2. Figure 7(B) shows a memory access map when reproducing and special reproducing in Figure 2. This is an example where the capacity of the output buffer is used as picture memory for some low resolution picture.

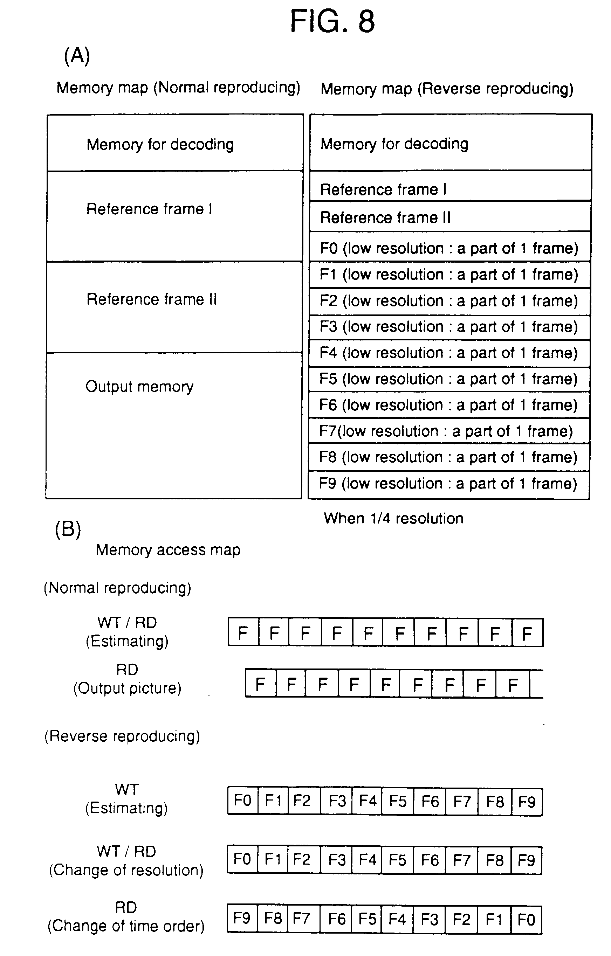

Figure 8(A) shows a map of memory 52 when reproducing and special reproducing in Figure 3 and Figure 4. Figure 8(B) shows a memory access map when reproducing and special reproducing in Figure 3 and Figure 4. This is an example in which the resolution of picture data is changed following the IDCT block 23. Memory 52 has the capacity to store many frames, for example 10 frames in Figure 8, because the amount of memory required for decoding each frame is small.

Thus, according to the present invention, it is possible to provide small scale hardware which nevertheless allows reverse reproduction.

## Claims

1. An apparatus for reproducing picture data, comprising:
means (21) for receiving compressed picture data compressed by inter-frame/intra-frame prediction coding;
means (22) for decoding said compressed picture data; characterised by:
means (41) for decreasing a size of said picture data, thereby decreasing a resolution of said picture data;
a memory (44, 51) for storing said picture data with changed resolution;
means for reproducing said picture data from said memory;
means (42) for omitting and inserting frames of said picture data from said changed resolution picture data;
means (43) for changing an order of said picture data; and
means for selecting for reproduction said picture data from one of said means for changing an order and said means for decoding.

2. An apparatus as claimed in claim 1, wherein said means for changing an order of said picture data uses said memory to reverse reproduce said picture data.

3. An apparatus as claimed in claim 1, wherein the receiving means comprises means for receiving compressed picture data that has been discrete cosine transformed, quantized, and variable length encoded to estimate in frames/between frames;
wherein the means for decoding compressed picture data comprises means for variable length decoding said compressed picture data; and further comprising:
means for inverse quantizing said decoded picture data; and
means (23) for inverse discrete cosine transforming said inverse quantized picture data;
wherein the means for changing a resolution of said decoded data comprises means, coupled to said inverse transforming means, for changing a resolution of said picture data by decreasing a size of said picture data to provide a lower resolution;
wherein the selecting means comprises means for selecting said picture data from one of said means for changing a resolution and said inverse transforming means;
further comprising means for decompressing data from said means for selecting to form frames;
wherein the means for omitting and inserting comprises means for omitting and inserting frames of said picture data from said means for decoding in a reverse reproducing operation;
and further comprising a memory to temporarily store said picture data, coupled to said means for decompressing, said means for omitting and inserting and said means for changing.

4. An apparatus as claimed in claim 1, wherein the receiving means comprises means for receiving compressed picture data that has been discrete cosine transformed, quantized, and variable length encoded to estimate in frames/between frames;
wherein the means for decoding comprises means (22) for variable length decoding said compressed picture data, and further comprising;
means (61) for inverse quantizing said decoded picture data;
means (62), coupled to said means for inverse quantizing, for changing a resolution of, and inverse discrete cosine transforming said picture data by deleting a portion of pixel data of said picture data;
means for decompressing said picture data from said means for changing a resolution and inverse discrete cosine transforming to form frames; and
a memory to temporarily store said picture data coupled to said means for decompressing and said means for changing.

5. A method for reproducing picture data, comprising the steps of:
receiving compressed picture data compressed by inter-frame prediction coding;
decoding said compressed picture data;
decreasing a size of said picture data thereby decreasing the resolution of said picture data;
storing in a memory the picture data with changed resolution;
reproducing said picture data from said memory; and
omitting and/or inserting frames from said picture data from said resolution decreasing step;
changing an order of said picture data; and
selecting from one of said picture data of changed order and said decoded picture data, to reproduce said picture data.

## Patentansprüche

1. Einrichtung zum Wiedergeben von Bilddaten, umfassend:
eine Vorrichtung (21) zum Empfangen komprimierter Bilddaten, die mit Bild-zu-Bild- und Innenbild-Vorhersagecodierung komprimiert sind;
eine Vorrichtung (22) zum Decodieren der komprimierten Bilddaten, gekennzeichnet durch:
eine Vorrichtung (41), die den Umfang der Bilddaten verkleinert und dadurch die Auflösung der Bilddaten verringert;
einen Speicher (44, 51) zum Speichern der Bilddaten mit veränderter Auflösung;
eine Vorrichtung zum Wiedergeben der Bilddaten aus dem Speicher;
eine Vorrichtung (42) zum Weglassen und Einfügen von Bilddatenframes aus den Bilddaten mit veränderter Auflösung;
eine Vorrichtung (43) zum Verändern der Reihenfolge der Bilddaten; und
eine Vorrichtung zum Auswählen der Bilddaten für die Wiedergabe entweder aus der Vorrichtung zum Verändern der Reihenfolge oder der Decodiervorrichtung.

2. Einrichtung nach Anspruch 1, wobei die Vorrichtung zum Verändern der Reihenfolge der Bilddaten den Speicher dazu verwendet, die Bilddaten rückwärts wiederzugeben.

3. Einrichtung nach Anspruch 1, wobei die Empfangsvorrichtung eine Vorrichtung zum Empfangen komprimierter Bilddaten umfasst, die diskret cosinustransformiert, quantisiert und lauflängencodiert sind, um innerhalb der Frames bzw. zwischen den Frames Schätzungen auszuführen,
und die Vorrichtung zum Decodieren komprimierter Bilddaten eine Vorrichtung zum Lauflängendecodieren der komprimierten Bilddaten umfasst und zudem enthält:
eine Vorrichtung zum Entquantisieren der decodierten Bilddaten; und
eine Vorrichtung (23) zum diskreten Cosinusrücktransformieren der entquantisierten Bilddaten,
und die Vorrichtung zum Verändern der Auflösung der decodierten Daten eine mit der Rücktransformationsvorrichtung verbundene Vorrichtung umfasst, um die Auflösung der Bilddaten zu verändern, indem sie den Umfang der Bilddaten verringert, um eine niedrigere Auflösung zu liefern,
und die Auswahlvorrichtung eine Vorrichtung zum Auswählen der Bilddaten entweder aus der Vorrichtung zum Auflösungsverändern oder der Rücktransformationsvorrichtung enthält,
und die Einrichtung zudem eine Vorrichtung zum Entkomprimieren der Daten aus der Auswahlvorrichtung zum Bilden von Frames umfasst,
wobei die Vorrichtung zum Weglassen und Einfügen eine Vorrichtung zum Weglassen und Einfügen von Bilddatenframes aus der Decodiervorrichtung bei einem Wiedergabevorgang in Rückwärtsrichtung enthält,
und zudem einen Speicher umfasst, der die Bilddaten temporär speichert und mit der Entkomprimiervorrichtung, der Vorrichtung zum Weglassen und Einfügen und der Veränderungsvorrichtung verbunden ist.

4. Einrichtung nach Anspruch 1, wobei die Empfangsvorrichtung eine Vorrichtung zum Empfangen komprimierter Bilddaten enthält, die diskret cosinustransformiert, quantisiert und lauflängencodiert sind, um innerhalb der Frames bzw. zwischen den Frames Schätzungen auszuführen,
und die Vorrichtung zum Decodieren eine Vorrichtung (22) zum Lauflängendecodieren der komprimierten Bilddaten umfasst und zudem enthält:
eine Vorrichtung (61) zum Entquantisieren der decodierten Bilddaten;
eine Vorrichtung (62), die mit der Vorrichtung zum Entquantisieren, Verändern der Auflösung und diskreten Cosinusrücktransformieren der Bilddaten durch das Löschen eines Teils der Pixeldaten der Bilddaten verbunden ist;
eine Vorrichtung zum Entkomprimieren der Bilddaten aus der Vorrichtung zum Verändern der Auflösung und diskreten Cosinusrücktransformieren, um Frames zu bilden; und
einen Speicher, der die Bilddaten temporär speichert und mit der Entkomprimiervorrichtung und der Veränderungsvorrichtung verbunden ist.

5. Verfahren zum Wiedergeben von Bilddaten, umfassend die Schritte:
das Empfangen von komprimierten Bilddaten, die mit der Bild-zu-Bild-Vorhersagecodierung komprimiert sind;
das Decodieren der komprimierten Bilddaten;
das Verkleinern des Umfangs der Bilddaten und dadurch das Verringern der Auflösung der Bilddaten;
das Speichern der Bilddaten mit veränderter Auflösung in einem Speicher;
das Wiedergeben der Bilddaten aus dem Speicher; und
das Weglassen und/oder Einfügen von Bilddatenframes aus dem Schritt des Verringerns der Auflösung;
das Verändern der Reihenfolge der Bilddaten; und
das Auswählen entweder aus den Bilddaten mit veränderter Reihenfolge oder den decodierten Bilddaten zum Wiedergeben der Bilddaten.

## Revendications

1. Un appareil pour reproduire des données d'image, comprenant :
des moyens (21) de réception de données d'image comprimées qui ont été comprimées par codage de prédiction inter-trame/intra-trame ;
des moyens (22) de décodage desdites données d'image comprimées ; caractérisé par :
des moyens (41) de diminution de la dimension desdites données d'image, de manière ainsi à diminuer la résolution desdites données d'image ;
une mémoire (44, 51) de stockage desdites données d'image à résolution modifiée ;
des moyens de reproduction desdites données d'image à partir de ladite mémoire ;
des moyens (42) d'omission et d'insertion de trames desdites données d'image à partir desdites données d'image à résolution modifiée ;
des moyens (43) de modification de l'ordre desdites données d'image ; et
des moyens de sélection pour une reproduction desdites données d'image à partir d'un desdits moyens de modification de l'ordre et desdits moyens de décodage.

2. Un appareil tel que revendiqué à la revendication 1, dans lequel lesdits moyens de modification de l'ordre desdites données d'image utilisent ladite mémoire pour effectuer une reproduction inverse desdites données d'image.

3. Un appareil tel que revendiqué à la revendication 1, dans lequel les moyens de réception comprennent des moyens pour recevoir des données d'image comprimées qui ont subi une transformation de cosinus discret, ont subi une quantification, et ont subi un codage de longueur variable afin d'estimer des en-trames/ entre-trames ;
dans lequel les moyens de décodage des données d'image comprimées comprennent des moyens pour effectuer un décodage de longueur variable desdites données d'image comprimées ; et comprenant en outre :
des moyens pour effectuer une quantification inverse desdites données d'image décodées ; et
des moyens (23) pour effectuer une transformation de cosinus discret inverse desdites données d'image ayant subi une quantification inverse ;
dans lequel les moyens de modification de la résolution desdites données décodées comprennent des moyens, couplés auxdits moyens de transformation inverse, pour modifier la résolution desdites données d'image en diminuant la dimension desdites données d'image pour fournir une résolution plus basse ;
dans lequel les moyens de sélection comprennent des moyens pour sélectionner lesdites données d'image à partir d'un desdits moyens de modification de la résolution et desdits moyens de transformation inverse ;
comprenant en outre des moyens pour décomprimer les données provenant desdits moyens de sélection pour former des trames ;
dans lequel les moyens d'omission et d'insertion comprennent des moyens pour omettre et insérer des trames desdites données d'image à partir desdits moyens de décodage dans une opération de reproduction inverse ;
et comprenant en outre une mémoire pour stocker de manière temporaire lesdites données d'image, couplée auxdits moyens de décompression, auxdits moyens d'omission et d'insertion et auxdits moyens de modification.

4. Un appareil tel que revendiqué à la revendication 1, dans lequel les moyens de réception comprennent des moyens pour recevoir des données d'image comprimées qui ont subi une transformation de cosinus discret, ont subi une quantification, et ont subi un codage de longueur variable afin d'estimer des en-trames/entre-trames ;
dans lequel les moyens de décodage comprennent des moyens (22) pour effectuer un décodage de longueur variable desdites données d'image comprimées, et comprenant en outre :
des moyens (61) pour effectuer une quantification inverse desdites données d'image ;
des moyens (62), couplés auxdits moyens de quantification inverse, pour modifier la résolution et effectuer une transformation de cosinus discret inverse desdites données d'image en supprimant une partie des données de pixel desdites données d'image ;
des moyens de décompression desdites données d'image à partir desdits moyens de modification de la résolution et de transformation de cosinus discret inverse pour former des trames ; et
une mémoire pour stocker de manière temporaire lesdites données d'image couplées auxdits moyens de décompression et auxdits moyens de modification.

5. Un procédé pour reproduire des données d'image comprenant les étapes de:
réception de données d'image comprimées qui ont été comprimées par codage de prédiction inter-trame ;
décodage desdites données d'image comprimées ;
diminution de la dimension desdites données d'image en diminuant ainsi la résolution desdites données d'image ;
stockage dans une mémoire des données d'image à résolution modifiée ;
reproduction desdites données d'image à partir de ladite mémoire ; et
omission et/ou insertion des trames à partir desdites données d'image de ladite étape de diminution de résolution ;
modification de l'ordre desdites données d'image ; et
sélection à partir d'une desdites données d'image d'ordre modifié et desdites données d'image décodées, afin de reproduire lesdites données d'image.
